# EUROPEAN PATENT SPECIFICATION

(11) **EP 0 600 354 B1**
(45) Date of publication and mention of the grant of the patent: **10.06.1998**
(21) Application number: 93118875.9
(22) Date of filing: 24.11.1993
(51) Int. Cl.: H01B 1/24, C08K 3/04

(54) **Static dissipating molding compound**
Formverbindung zur Entladung statischer Elektrizität
Composé de moulage dissipant l'électricité statique

(30) Priority: 02.12.1992 DE 4240508
(43) Date of publication of application: 08.06.1994
(73) Proprietor: MINNESOTA MINING AND MANUFACTURING COMPANY, St. Paul, Minnesota 55133-3427 (US)
(72) Inventor: Dust, Herbert, D-21244 Buchholz (DE); Meinke, Alfred, D-21629 Neu-Wulmstorf (DE); Viebranz, Manfred, D-21279 Appel (DE)
(74) Representative: Patentanwälte Hauck, Graalfs, Wehnert, Döring, Siemons

(56) References cited:
- EP-A- 0 297 888
- DATABASE WPI Section Ch, Derwent Publications Ltd., London, GB; Class A85, AN 85-199556 & JP-A-60 124 654 (MITSUBISHI PETROCHEMICAL) 3 July 1985
- DATABASE WPI Section Ch, Derwent Publications Ltd., London, GB; Class A85, AN 85-272959 & JP-A-60 184 534 (MEIDENSHA) 20 September 1985
- PATENT ABSTRACTS OF JAPAN vol. 9, no. 1 (C-259)5 January 1985 & JP-A-59 155 459 (TOYO BOSEKI) 4 September 1984

## Description

The invention refers to the use of a molding compound according to the preamble according to patent claim 1.

Static dissipative, electrically conductive or semi-conductive modifications of conventional polymers are known for different purposes, e.g. dissipation of eletrostatic charges, shielding from electromagnetic fields or the like.

The polymers are inter alia thermoplastic polymers, however, also thermosetting polymers, elastic polymers or coatings can be made conductive. To this purpose, so-called conductive carbon blacks can be used as conductive substances (carbon blacks having a specific surface of > 80 m²/g), carbon fibers, metal-coated glass balls, metallic fibers or metal chips. However, also mixtures of conventional and intrinsic conductive polymers are known.

From the German patent specification DE 33 01 635, a method for the manufacturing of conductive plastic material has become known wherein the mixing ratio is made dependent upon the measured electrical values of the extrudate. From the German patent specification 35 08 794, a method has become known for the manufacturing of a plastic housing with a conductive film. The method consists of a plurality of relatively expensive method steps which, however, have the advantage that the desired electrical parameters can be achieved.

In the US patent specification 4 301 040 it is described to finely distribute conductive particles, e.g. carbon black particles in a matrix of a polyurethane foam. For example, a conductive or semi-conductive mat can be achieved in order to enclose and contemporarily shield electronic components, devices or the like.

From the German patent specification DE 34 41 900 it has become known to build a shield from electromagnetic waves by a compound of plastic material and conductive components of finely divided carbon black and graphite. The US patent specification No. 4 404 125 discloses a matrix material, e.g. BPS with carbon fibers or carbon black particles added to achieve conductivity. A similar solution is disclosed by the German patent specification DE 38 28 696, wherein conductive mixtures of Polyarylene sulfides (PAS) with caoutchoucs, conductive carbon black and graphite are proposed. With such compounds, low resistive conductive paths can be produced, with inhomogenous islands of insulating material therebetween. A dissipation of electrical charges is only possible to a limited extent.

From the European patent specification EP 0 297 888 it has become known to use a combination of two specific conductive carbon blacks in order to achieve an electrically conductive synthetic resin compound. An optimal shielding is intended. The European patent specification EP 0 249 101 has a similar subject matter. Molded parts, extruded sheets and injection-molded bodies of various kinds are disclosed having a static dissipative performance up to a certain conductivity. The known molded parts are manufactured on the basis of thermoplastic polycarbonates and thermoplastic polyalkylen terephthalates with addition of carbon black and graphite, with the carbon black or graphite having a grain size of 500 to 1000 nm.

The German patent specification DE 39 43 420 describes a method for the manufacturing of static dissipative or conductive polymer compounds wherein at least two additional substances are added to a non-conductive matrix polymer, with one of the additional substances being a fine carbon black and the other a fine graphite or fine particles of a non-conductive substance, respectively. The combination of the additional substances is to improve the conductivity by a synergetic effect with reference to the percental share (weight per cent) of the total weight. The known method allows a reduction of the content of the added substance under maintaining the predetermined conductivity.

The Japanese patent specifications JP 60(1985)-135441 and JP 62(1987)-246959 disclose also the use of two different conductive carbon blacks. In the first case, a specific resistivity of 10³ to 10⁶ Ωcm is intended which is to be constant in view of the kneading cycles for the molding compound.

In the JP-A-60 124 654 two types of particles are described. Small particles with a surface area of <850 m²/g and large particles with a surface area of >10 m²/g are to be selected. These are particles both at the extreme ends of the known range for carbon blacks. The mixture of the carbon blacks is to provide good shielding properties. Both shielding values relate to conductivities in the order of 10² to 10³ Ω cm which is drastically different from static dissipative material.

JP-A-60 184 534 relates to carbon black particles which are relatively vaguely defined and to fibers which are significantly larger than the carbon black particles.

JP-A-59 155 459 discloses a combination of particles, namely graphite particles in the extreme range between 10 and 500.000 nm and carbon black particles which are not specified.

Conductive carbon blacks have the advantage that the conductivity of a compound drastically increases only at a small content thereof, e.g. less than 20 Vol.-%. This behaviour is called "percolation". This performance, however, has the disadvantage that the resistivity is considerably changed upon a small change of the parameters. This phenomenon above all occurs in the resistivity range of about 10⁶ to 10⁹ Ω cm. This is the range needed for a static dissipation of suitable materials. It has been found out that upon the manufacture of the molding compound and during the molding process, considerable forces act on the additives and create drastic changes in the sizes and structure of the carbon black particles. In experiments it turned out that the specific resistivity may change about orders of magnitude if the proportion of a conductive carbon black is changed to a small extent or if the molding temperature is changed. The molding temperature influences the shear property of the material and thus the mechanical stress of the substances. Further, a repeated kneading of the molding compound leads to a significant change of the electrical resistivity. Therefore, up to now it was extraordinarily difficult to manufacture molded parts as for example containers, cabinets for industrial control circuits or other articles having a specific volume resistivity over their total geometry. The prior art discussed above does not offer a solution.

### SUMMARY OF THE INVENTION

With the invention, a static dissipative molding compound is created having a specific volume resistivity of about 10⁶ to 10⁹ Ω cm, with the volume resistivity not changing more than one order of magnitude under the above conditions.

With the molding compound used according to the invention, two carbon black components are selected with one of which being a conventional conductive carbon black type. The carbon black with coarse primary particles of a grain size between 10 and 400 nm is not a typical conductive additive, on the contrary, its influence on the conductivity on the molding compound is relatively low if added to component A at a medium mixing ratio. According to an embodiment of the invention, the specific resistivity is significantly above 10¹⁰ Ω cm and extends into ranges up to 10¹⁵ Ω cm if the coarse carbon black is solely used. A static dissipation cannot be achieved with such resistivity values. It is, however, surprising that the combination of such a coarse carbon black with a fine carbon black leads to favourable results.

Essential to the invention is the utilization of low structure carbon blacks and the specific ratio of the sizes of the primary particles of both carbon black components as well. As known, the primary particles of carbon blacks are agglomerated to groups or aggregates (secondary particles), the number of primary particles per aggregate being decisive whether it can be spoken of low structure or higher structured carbon blacks. It is typical for low structure carbon blacks that the DBP absorption values are relatively small. The DBP absorption values are measured according to the standard rules of ASTMD 2414 and 3493. It is desired to have a difference as small as possible between the DBP absorption values, e.g. equal to or smaller than 10%. The fine carbon black is selected such that the sizes of the primary particles thereof approximately correspond to the interstices between agglomerated primary particles of the other component. Idealized, the agglomerated primary particles of the carbon black can be regarded as a package or cluster of spheres. The interstices between adjacent spheres are defined by the diameter of the spheres. Correspondingly, the claimed ratio of the sizes of both components B and C are selected. It is understood that the primary particles of the fine carbon black can be also significantly smaller than the mentioned sizes of the interstices between the primary particles of the coarse carbon black. Only such fine carbon blacks, however, are excluded which particles have a size allowing the accommodation of a plurality of primary particles in the mentioned interstices between agglomerated primary particles of the coarse carbon black.

With the molding compound used according to the invention, it turned out that the dependency of the specific volume resistivity on the percental share of the conductive additive, on the temperature and on the mechanical influence, respectively, is significantly reduced.

The molding compound used according to the invention can utilize arbitrary polymers. Since the conductivity performance upon addition of a carbon black changes with specific polymers, an optimization can be achieved only by experiments. In particular, the ratio of the contents of both additives is to be investigated for a specific polymer if the dependency of the resistivity should be minimal in view of the mentioned parameters.

Instead of the second low structure carbon black also a graphite can be used having fine particles agglomerated to secondary particles mentioned above.

The invention is subsequently explained in more detail with reference to accompanying drawings, wherein
- Fig. 1: shows a graph for the specific volume resistivity in dependence on the carbon black content for polypropylene (PP) for different carbon black compositions,
- Fig. 2: shows a graph for the specific volume resistivity in dependence on the carbon black content for silicone rubber added by carbon black types according to the invention,
- Fig. 3: shows a graph for the specific resistivity of silicone rubber in dependence on a carbon black mixture according to the invention for different ratios of carbon black portions,
- Fig. 4: shows a graph for the specific volume resistivity in dependence on a carbon black mixture according to the invention for different matrix polymers, and
- Fig. 5: shows a graph for the specific volume resistivity in dependence on the mass temperature for the molding compound according to the invention and for known molding compounds as well.

In the examples described below, the following carbon black combinations are used:
N-326 (Neotex 100-H, Columbian Carbon Company)
N-990 (Sevacarb MT, Columbian Carbon Company) or
KS 44 (Lonza)
N-990 (Sevacarb MT, Columbian Carbon Company)

The mentioned carbon blacks and graphites, respectively, can be classified as follows:

| | Carbon Black | | Graphite KS 44 |
|---|---|---|---|
| | N-326 LS | N-990 | |
| Particle Size (nm) | 28 | 350 | 44 |
| DBP Absorption (ASTM D 2414, ml/100 g) | 72 | 41 | * |
| DBP Absorption (ASTM D 3493, ml/100 g) | 71 | 37 | * |

The DBP measurements are not applicable to graphite.

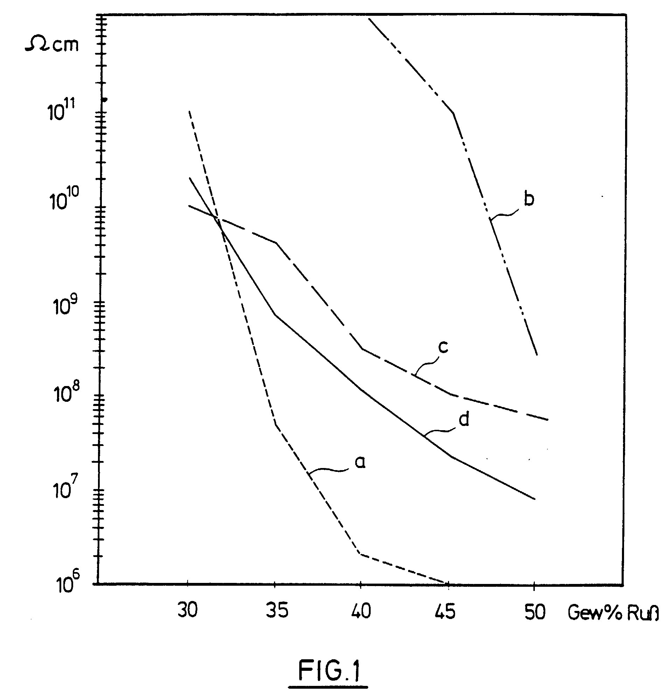

The curves of Fig. 1 represent the addition of different carbon black mixtures or carbon blacks, respectively, to polypropylene, with the curves illustrating the dependency of the specific volume resistivity on the weight percentage of the added carbon black. Curve "a" represents the course of the specific resistivity for the addition of a typical conductive carbon black. It can be seen that in the typical conductivity range of 10⁶ to 10⁹ Ω cm which is determining for static dissipative substances a relatively high gradient occurs. Small changes of the contents lead to considerable changes in resistivity. The same is true with respect to curve "b" which is typical for the addition of a coarse graphite.

The curves "c" and "d" indicate carbon black mixtures used according to the invention. Curve "c" is representative for the mixture of KS 44 with N-990 at a ratio of 5:1. From the above table it can be derived that graphite KS is the fine component. Curve "d" is indicative for the mixture of N-326 and N-990 at a ratio of 1:1,7. The above table makes clear that the first component is a fine particle carbon black while the second component is represented by a coarse carbon black. It can be seen that the curves "c" and "d" have a considerable smaller gradient as curves "a" and "b". This results in a smaller dependency of the specific volume resistivity on the percentage of weight of the carbon black, but also on the mechanical and thermal stresses as will be explained more below.

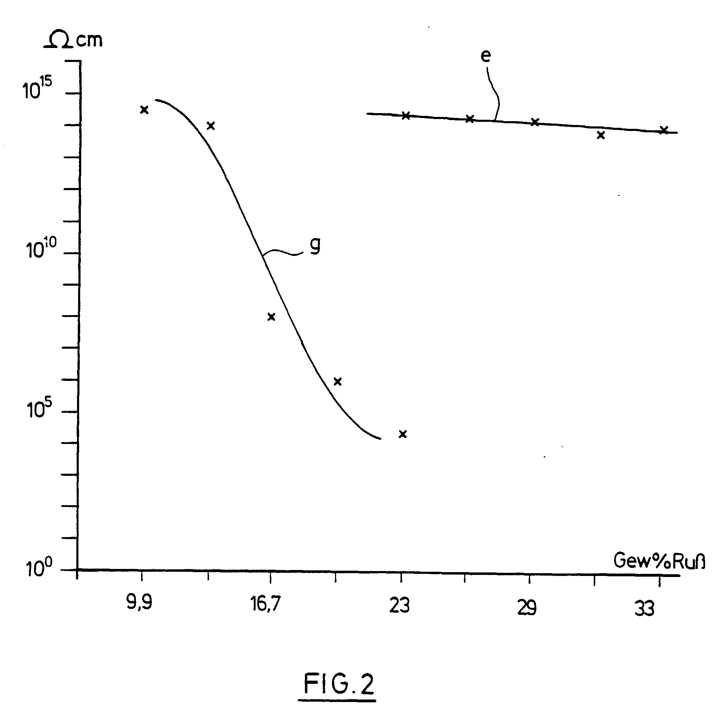

In Fig. 2 it is shown how two different carbon black types change the specific resistivity if added to silicone rubber alone. Curve "e" represents the performance of the molding compound if N-990 is solely added. It can be seen that an addition of relatively coarse carbon black to a larger extent do not provide a sufficient conductivity for the compound, rather, is within the insulation range. Therefore, N-990 cannot be designated as a typical conductive carbon black. N-326, however, is a typical conductive carbon black. As can be seen in curve "g", the specific volume resistivity drastically decreases upon an addition of 10% of this component. A saturation is achieved at a content of 30%. A higher content of carbon black would not improve the conductivity. As can be seen, the gradient of curve "g" in the interesting range from 10⁶ up to 10⁹ Ω cm is relatively high. Only the combination of both carbon blacks yields to a favourable course of the curve as illustrated by curves "c" and "d" in Fig. 1.

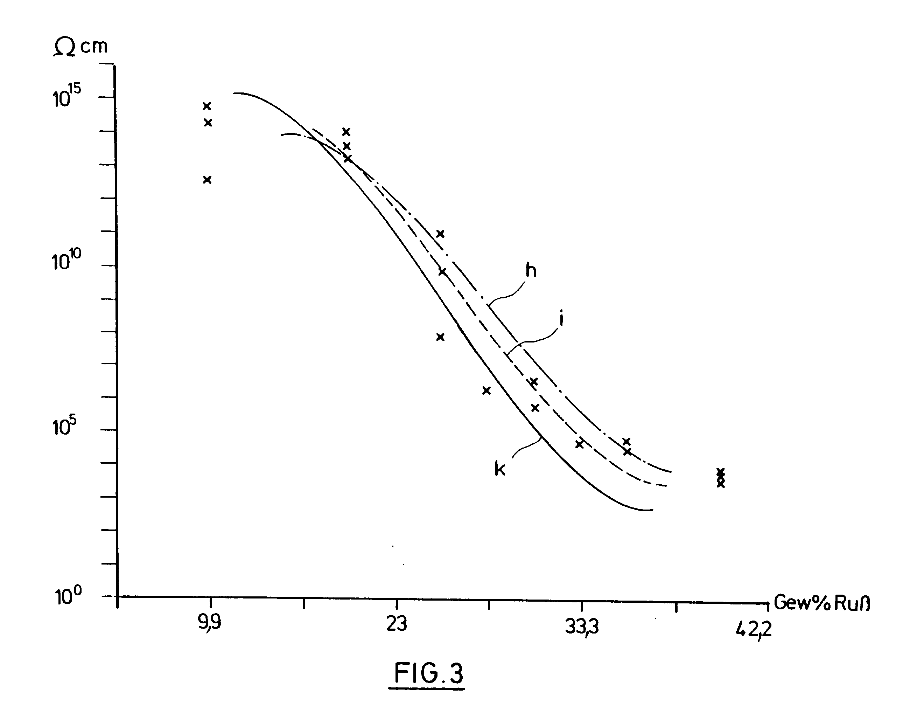

The curves "h", "i", "k" in Fig. 3 represent the specific volume resistivity for silicone rubber added by a combination of carbon black at different ratios. A combination of N-326 and N-990 is used, with curve "h" representing the ratio of 1:2, curve "i" the ratio of 1:1,7 and curve "k" the ratio of 1:4. With the selected combinations of fine and coarse carbon blacks it can be found out by experiments which percentage of weight leads to the best results for a given matrix polymer.

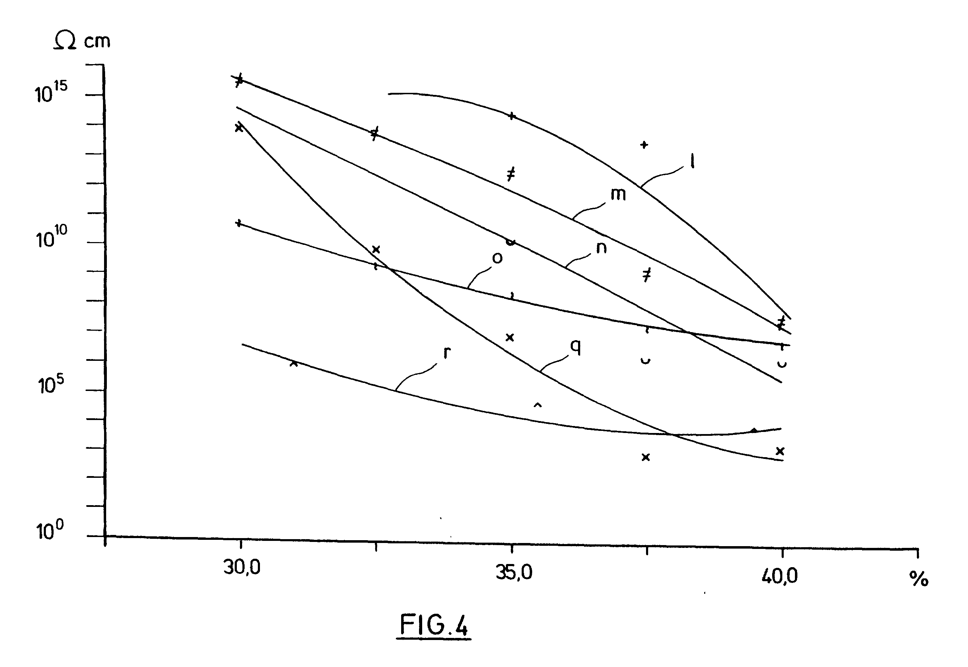

The curves of Fig. 4 represent different matrix polymers mixed with carbon black mixtures of N-990 and N-326 at the ratio of 1,7:1. In curve "l" represents a polycarbonate, curve "m" a polyethlene sulfide, curve "n" a polyarylene, curve "o" a polypropylene, curve "q" a polyphenylen sulfide and curve "r" a silicone caoutchouc (e.g. vinyl-Q-material (VQM), with Q a quaternary silicone). By the choice of the desired matrix polymer, thus, the range for the desired resistivity performance can be achieved.

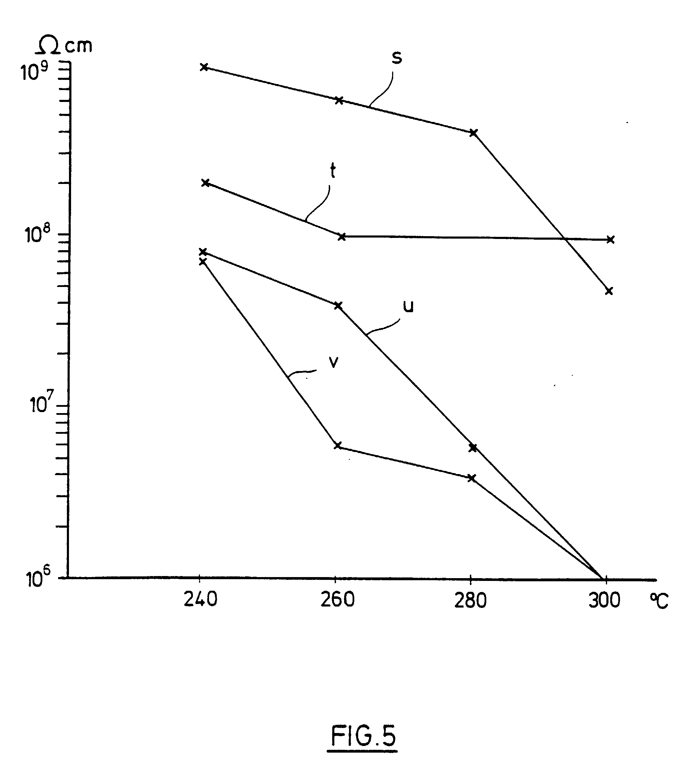

Curves "s", "u" and "v" in Fig. 5 represent known static dissipative materials. It can be seen that with the known materials the specific volume resistivity considerably varies in dependence on the mass temperature. The temperature for example is a result of the treating in an extruder so that the temperatures are also an indication for the mechanical shear stress which also may lead to a cracking of the carbon black structures. Curve "t", however, provides a relatively small temperature dependency. It represents a molding compound of a polypropylene as polymer matrix and a carbon black combination according to the invention.

With the method according to the invention, a uniform mixture of carbon black combinations with a polymer matrix is achieved. Individual conductive paths between insulating islands are avoided so that good static dissipative properties result. As shown, the optimal results can be achieved for a predetermined carbon black combination and a predetermined polymer matrix.

## Claims

1. The use of a molding compound including the components A+B+C with
A a non-conductive matrix polymer or polymer mixture, respectively,
B a first low structure carbon black having primary coarse particles between 10 and 400 nm, agglomerated to secondary particles and defining interstices therebetween
C a second low structure carbon black having fine primary particles agglomerated to secondary particles and defining interstices therebetween with said primary particles of said component C selected such that the sizes thereof approximately correspond to the interstices between said agglomerated primary particles of said component B and having a lower limit of the sizes such that accommodation of a plurality of primary particles of said component C in said interstices of agglomerated primary particles of component B is excluded,
for static dissipation within a volume resistivity range of about 10⁶ to 10⁹ Ω cm.

2. The use of a molding compound including the components A+B+C with
A a non-conductive matrix polymer or polymer mixture, respectively,
B a low structure carbon black having primary coarse particles between 10 and 400 nm, agglomerated to secondary particles and defining interstices therebetween
C a graphite having fine particles agglomerated to secondary particles and defining interstices therebetween with said primary particles of said component C selected such that the sizes thereof approximately correspond to said interstices between said agglomerated primary particles of said component B having a lower limit of the particle sizes being such that the accommodation of a plurality of primary particles of said component C in said interstices of aggolomerated primary particles of component B is excluded,
for static dissipation within a volume resistivity range of 10⁶ to 10⁹ Ω cm.

3. The use of the molding compound of claims 1 or 2, wherein said carbon black of said component B is such that upon addition to said component A alone at a medium ratio a high volume resistivity is effected considerably above 10¹⁰ Ω cm which is substantially independent from changes of the mixing ratio.

4. The use of the molding compound of claim 1, wherein the difference of the DBP absorption values (ASTM D 2414 and ASTM D 3493) of said carbon blacks B and C is not larger than 10%.

5. The use of the molding compound of claim 1, wherein the ratio of weight of said components B and C is between 5:1 and 1:2.

6. The use of the molding compound of claim 1, wherein said component B is Neotex 100-H (N-326) or graphite KS 44 and said component C is Sevacarb MT (N-990).

7. The use of the molding compound of claim 1, wherein the content of both said components B and C is between 20 and 50 weight per cent referred to the total weight of said compound.

8. A method for the manufacturing of a molding compound according to claim 1, wherein said components of said molding compound are -mixed by conventional mixing devices.

9. The use of the molding compound of claim 1 for the manufacture of molded parts.

## Patentansprüche

1. Verwendung einer Formmasse aus den Komponenten A+B+C mit
A einem nichtleitenden Matrix-Polymer oder Polymergemisch,
B einem ersten Niedrigstrukturruß mit groben Primärteilchen zwischen 10 und 400 nm, die zu Sekundärteilchen agglomeriert sind und zwischen sich Lücken bilden,
C einem zweiten Niedrigstrukturruß aus feinen Primärteilchen, die zu Sekundärteilchen agglomeriert sind und Lücken zwischen sich bilden, wobei die Primärteilchen der Komponente C so ausgewählt sind, daß ihre Größe annähernd den Lücken zwischen den agglomerierten Primärteilchen der Komponente B entspricht und nach unten in der Größe derart begrenzt sind, daß eine Aufnahme einer Vielzahl von Primärteilchen der Komponente C in den Lücken der agglomerierten Primärteilchen der Komponente B ausgeschlossen ist,
für die statische Ableitung innerhalb eines spezifischen Durchgangswiderstands von etwa 10⁶ bis 10⁹ Ω cm.

2. Verwendung einer Formmasse aus den Komponenten A+B+C mit
A einem nichtleitenden Matrix-Polymer oder Polymergemisch,
B ein Niedrigstrukturruß mit groben Primärteilchen zwischen 10 und 400 nm, die zu Sekundärteilchen agglomeriert sind mit Lücken dazwischen,
C einem Graphit mit feinen Teilchen, die zu Sekundärteilchen agglomeriert sind, zwischen denen Lücken vorgesehen sind, wobei die Primärteilchen der Komponente C so ausgewählt sind, daß ihre Größe annähernd der Lücke zwischen den agglomerierten Primärteilchen der Komponente B entspricht, wobei die untere Größengrenze der Teilchen derart ist, daß die Aufnahme einer Vielzahl von Primärteilchen der Komponente C in den Lücken der agglomerierten Primärteilchen der Komponente B ausgeschlossen ist,
für eine statische Ableitung mit einem spezifischen Durchgangswiderstand von 10⁶ bis 10⁹ Ω cm.

3. Verwendung der Formmasse nach Anspruch 1 oder 2, wobei der Ruß der Komponente B derart ist, daß bei Zugabe zur Komponente A allein bei einem mittleren Verhältnis ein hoher spezifischer Durchgangswiderstand bewirkt wird, der erheblich über 10¹⁰ Ω cm liegt, welcher im wesentlichen unabhängig ist von Änderungen im Mischungsverhältnis.

4. Verwendung der Formmasse nach Anspruch 1, wobei die Differenz der DBP-Absorptionswerte (ASTM D 2414 und ASTM D 3493) der Ruße B und C nicht größer als 10 % ist.

5. Verwendung der Formmasse nach Anspruch 1, wobei das Gewichtsverhältnis der Komponenten B und C zwischen 5 : 1 und 1 : 2 liegt.

6. Verwendung der Formmasse nach Anspruch 1, wobei die Komponente B Neotex 100-H (N-326) oder Graphit KS 44 ist und die Komponente C Sevacarb MT (N-990).

7. Verwendung der Formmasse nach Anspruch 1, wobei in bezug auf das Gesamtgewicht der Masse der Anteil der Komponenten B und C zwischen 20 und 50 Gew.-% beträgt.

8. Verfahren zur Herstellung einer Formmasse nach den Ansprüchen 1 bis 7 durch übliches Mischen der Komponenten der Formmasse auf üblichen Mischaggregaten.

9. Verwendung der Formmasse nach Anspruch 1 zur Herstellung von Formteilen.

## Revendications

1. Utilisation d'un composé pour moulage comprenant les composants A+B+C avec :
A respectivement une matrice polymère non conductrice ou un mélange polymère,
B un premier noir de carbone à faible structure ayant des particules primaires grossières entre 10 et 400 nm, agglomérées à des particules secondaires et définissant des interstices entre celles-ci
C un second noir de carbone à faible structure ayant des particules primaires fines agglomérées à des particules secondaires et définissant des interstices entre celles-ci, lesdites particules primaires dudit composant C étant choisies de sorte que les tailles de celles-ci correspondent approximativement aux interstices entre lesdites particules primaires agglomérées dudit composant B et ayant une limite inférieure des tailles telle que le logement de plusieurs particules primaires dudit composant C dans lesdits interstices de particules primaires agglomérées du composant B soit exclu,
pour la dissipation de l'électricité statique dans un domaine de résistivité en volume d'environ 10⁶ à 10⁹ Ωcm.

2. Utilisation d'un composé pour moulage comprenant les composants A+B+C avec :
A respectivement une matrice polymère non conductrice ou un mélange polymère,
B du noir de carbone à faible structure ayant des particules primaires grossières entre 10 et 400 nm, agglomérées à des particules secondaires et définissant des interstices entre celles-ci,
C du graphite ayant de fines particules agglomérées à des particules secondaires et définissant des interstices entre celles-ci, lesdites particules primaires dudit composant C étant choisies de sorte que les tailles de celles-ci correspondent approximativement auxdits interstices entre lesdites particules primaires agglomérées dudit composant B ayant une limite inférieure des tailles de particules telle que le logement de plusieurs particules primaires dudit composant C dans lesdits interstices des particules primaires agglomérées du composant B soit exclu,
pour la dissipation de l'électricité statique dans un domaine de résistivité en volume de 10⁶ à 10⁹ Ωcm.

3. Utilisation du composé pour moulage selon les revendications 1 ou 2, dans lequel ledit noir de carbone dudit composant B est tel qu'après addition audit composant A seul en une proportion moyenne, on atteint une résistivité en volume élevée considérablement supérieure à 10¹⁰ Ωcm qui soit sensiblement indépendante de modifications des proportions du mélange.

4. Utilisation du composé pour moulage selon la revendication 1, dans lequel la différence entre les valeurs d'absorption DBP (ASTM D 2414 et ASTM D 3493) desdits noirs de carbone B et C n'est pas supérieure à 10 %.

5. Utilisation du composé pour moulage selon la revendication 1, dans lequel le rapport en poids desdits composants B et C est compris entre 5/1 et 1/2.

6. Utilisation du composé pour moulage selon la revendication 1, dans lequel ledit composant B est du Neotex 100-H (N-326) ou du graphite KS 44 et ledit composant C est du Sevacarb MT (N-990).

7. Utilisation du composé pour moulage selon la revendication 1, dans lequel la teneur en ledit composant B et en ledit composant C est comprise entre 20 et 50 % en poids par rapport au poids total dudit composé.

8. Procédé pour la fabrication d'un composé pour moulage selon la revendication 1, dans lequel lesdits composants dudit composé pour moulage sont mélangés par des dispositifs de mélange classiques.

9. Utilisation du composé pour moulage selon la revendication 1 pour la fabrication d'articles moulés.
